Europäisches Patentamt

European Patent Office

Office européen des brevets

(11) Publication number: **0 059 697**
**B1**

# EUROPEAN PATENT SPECIFICATION

(45) Date of publication of patent specification: **07.05.86**

(51) Int. Cl.⁴: **F 16 K 11/06, F 16 K 47/02**

(21) Application number: **82850027.2**

(22) Date of filing: **16.02.82**

(54) **A device for sliding valves, particularly for mixing faucets.**

(30) Priority: **26.02.81 SE 8101248**

(43) Date of publication of application:
**08.09.82 Bulletin 82/36**

(45) Publication of the grant of the patent:
**07.05.86 Bulletin 86/19**

(84) Designated Contracting States:
**CH DE LI NL**

(56) References cited:
**DE-A-2 356 211**
**DE-A-2 356 326**
**DE-A-2 737 907**
**DE-A-2 856 255**
**DE-A-2 937 475**
**DE-B-2 410 231**
**DE-U-7 904 780**

(73) Proprietor: **VARGARDA ARMATUR AB**
**Box 69**
**S-440 20 Vargarda (SE)**

(72) Inventor: **Riis, Valdemar**
**Skomakaregatan 3**
**S-440 20 Vargarda (SE)**

(74) Representative: **Roth, Ernst Adolf Michael et al**
**GÖTEBORGS PATENTBYRA AB Box 5005**
**S-402 21 Göteborg (SE)**

Courier Press, Leamington Spa, England.

**Description**

The present invention relates to a device for sliding valves, particularly for mixing faucets of the kind comprising two valve plates, which are engaging each other, one of which valve plates is fixed and provided with inlet openings and an outlet opening, and the other being movable relative to the first one and provided with a flow passage duct for adjusting the flow and/or the mixing ratio of the liquids, whereby guiding members are arranged at least in the area in front of the inlet openings in the longitudinal direction of the flow passage duct, i.e. in the direction from the inlet openings towards the outlet opening, which guiding members are thin sheets interconnected via a base plate and extending over substantially the entire depth of the flow passage duct, the sheets have a considerably larger extension in the depth of the flow passage duct than their thickness and spacing, and being adapted to cause the liquid or the liquids to flow laminarly through the mentioned flow passage duct.

Background of the Invention

In previously known valves of the kind mentioned above the movable valve plate is controlled by means of a control lever. The valve plates are favourably made of a ceramic material, whose surfaces facing each other are polished so that no sealing devices are needed. At narrow control slots however, i.e. at flow through a narrow slot, troublesome acoustic phenomena will occur. Several factors influence the formation of sounds from the fittings, i.e. the through-flow quantity, the construction of the mixing valve, the size of the control slot, cavitation, the sealing plates tendency to vibrate, the use of flow resistances etc. The size of the control slot has for example a large influence on the resulting sound, since the flow velocity in the slot increases the smaller the slot is. The increase of the through-flow will also cause a considerable increase of the high frequency part of the sound, which therefore seems even more disturbing. Without making any actions, the sound level may reach 30—35 dB(A) for a certain through-flow quantity. Oxygen in the water is released at the high flow velocities, which occur when the control slot is narrow, and slot cavitation occurs and the beam entering the mixing chamber will have unstable magnitude and direction, resulting in sound effect generating phenomena. Authorities who stipulate the allowable sound level for outlet armatures, have subdivided the armatures in different classes I—III, and different groups A—C, where the sound level for armature group I may be equal to or less than 20 dB(A) at 3 bar and for armature group II equal to or less than 30 dB(A) at 3 bar. If the group in question also shall belong to class A, the through-flow is allowed to be equal to or less than 15 l/min (or 0,25 l/s) at the same pressure, while for class B the corresponding value is 25 l/min (or 0,42 l/s). It is of course desired by all armature manufacturers to be placed in group I and class A, which however until now has been almost impossible for the kind of armature in question.

In the constructions known so far these problems have been approached one by one. In the DE—A1—2.356.326 there is described how a screen like the one mentioned above is used together with an airfilled elastic body. With screens of the kind used in these two constructions good noise reducing properties can be achieved, but a drawback is that particles in the water will clog the screens and the noise reducing properties will be lost after some time.

The US—A—4.157.099 describes at least one protrusion in the flow passage duct combined with a plurality of overlapping screens. In the DE—A1—2.658.124 there is described how the surfaces of the flow passage duct may be provided with different structures like corrugations etc. These two constructions do however rather increase the turbulence than they stabilize the flow. It has furthermore been tried to attenuate the sound by carefully rounding off the edges of the mixing chamber, always aiming at damping the noise. Also combinations of the actions mentioned above have occurred. together with the introduction of fixed resistors adapted for a certain flow quantity.

Through DE—A1—2856255 and FR—A—2.489.921 control members for single-grip mixing valves are known, where one of the movable valve plates is provided with a through hole, in which from the opposite side of the valve plate a guiding member has been inserted, which together with the said hole make an over-flow passage for the liquid. This construction demands a sealing between the guiding member and the movable valve plate, which in its turn presupposes that the valve plates and the guiding member are clamped in the mixing housing. Such a clamping results in that the movable valve plate is considerably more difficult to move as it is continuously exerted to a compacting pressure. Furthermore there is a risk for a leakage between the moveable valve plate and the guiding member.

The Object and Most Important Features of the Invention

The object of the present invention is to provide a simple, reliable and cheap construction, that presents a silent flow resistance which at the same time changes simultaneously with the size of the control slot, but also stabilizes the flow entering the flow passage duct. Furthermore the function of the mixing valve, particularly the mobility of the valve plates, should be utilized maximally without the necessity of clamping the valve plates in the valve housing. These objects have been achieved by the fact that the flow passage duct consists of a cavity with a bottom in the movable valve plate, said guiding members being located in said cavity with said base plate placed on the bottom of the flow passage duct, said sheets at least in the area just opposite said inlet openings extendings over the entire depth of the flow passage duct.

## Description of the Drawings

Figure 1 shows a section through a mixing faucet, e.g. a wash-basin mixer which is provided with a device according to the invention.

Figure 2 shows a section through the valve plates in the mixing faucet.

Figures 3, 4 and 5 shows the valve plates of Figure 2 in view from above and in different relative positions.

Figure 6 shows in perspective view an alternative embodiment of the guiding means.

## Description of the Preferred Embodiment

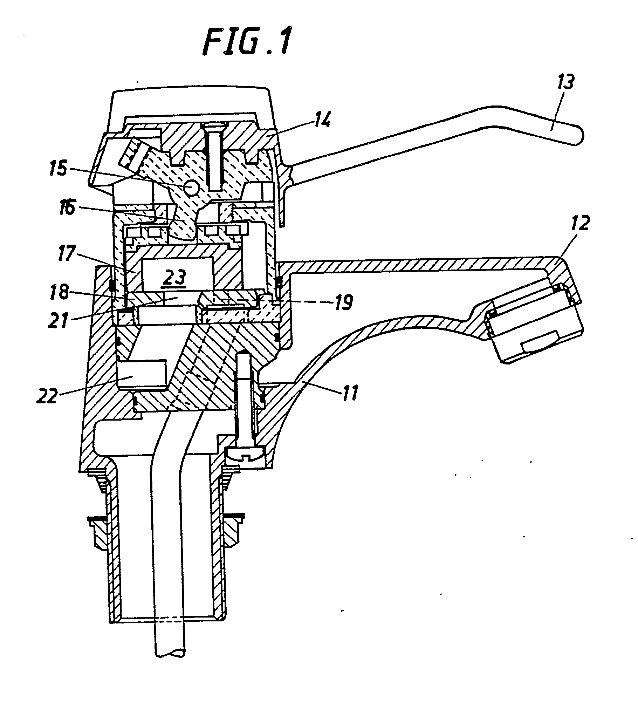

The mixing faucet shown in Figure 1 is of the so called single lever operated type and comprises a valve housing 11 with a spout 12 and a control lever 13, by which, on one hand, the upper part of the mixing housing 14, is rotatable around a vertical axis and on the other hand is tiltable around a horizontal axis 15. The level 13 can be thought of as a two-armed lever, which is journalled around a vertical as well as around a horizontal axis and the shorter lever arm 16 which acts upon a movable valve plate 17. This engages a second fixed valve plate 18, which is provided with two inlet openings 19, 20 for cold and hot water respectively, and an outlet opening 21, which communicates with the spout 12 through a duct 22.

The movable valve plate 17 is provided with a flow-passage duct 23 formed therein, in which duct are arranged guiding members 24, which in the embodiment shown are formed by thin sheets arranged in parallel and extending over the entire depth and length of the duct, and — at least in the region of the inlet-openings 19, 20 — extending all the way up to the upper edge of the flow-passage duct, i.e. to the flat side of the valve plate, so that these sheets engage the fixed valve plate 18. The depth of the flow passage duct 23 is conveniently chosen so that the sheets 24 have a reasonably larger extension in the depth dimension than their thickness and spacing.

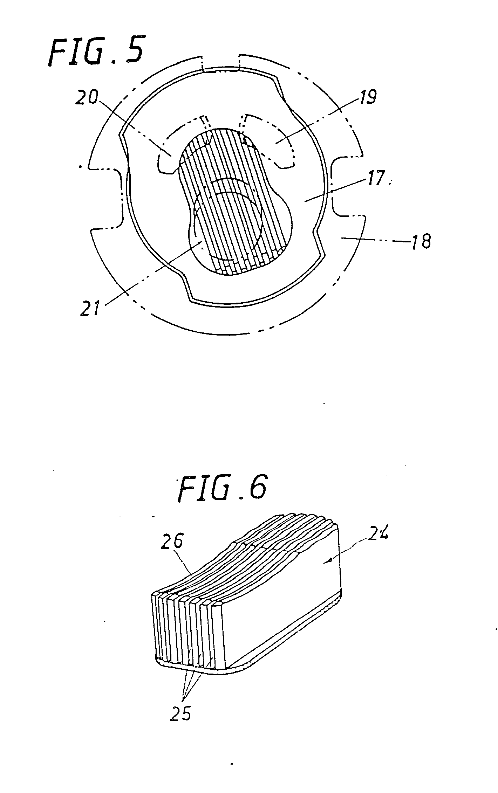

By providing the flow passage duct 23 with very narrow but deep ducts as seen in the flow direction of the liquids, a correspondingly small number of ducts 25 between the sheets 24 will be activated as shown for example in Figure 5 where the inlet opening 19 expose only a very little control slot. The extension and resistance of the ducts 25 are matched to the size of every appropriate control slot, and to the entering water quantity determined thereby. The flow entering through the control slot is catched in the exposed duct 25 and will thereby achieve a controlled stable flow into the control slot and a steady laminar flow through the ducts 25. At an increased control slot opening i.e. at increased flow, more and more ducts 25 will gradually be exposed.

Practical tests and measurements of sound levels at the mixer according to the invention have shown that at a flow of about 0,15 liter per second and a pressure drop of 300 kPa, the sound level from the armature without guiding organs was about 30 dB(A) while it has been possible to decrease the sound level to about 15 dB(A) with guiding members according to the invention. For comparison it can be mentioned that it with the above mentioned devices for decreasing the armature sound level such as screens, rubber dampers, bottom structure design etc. was possible to decrease the sound level of the armature only to 25 dB(A) according to our measurements.

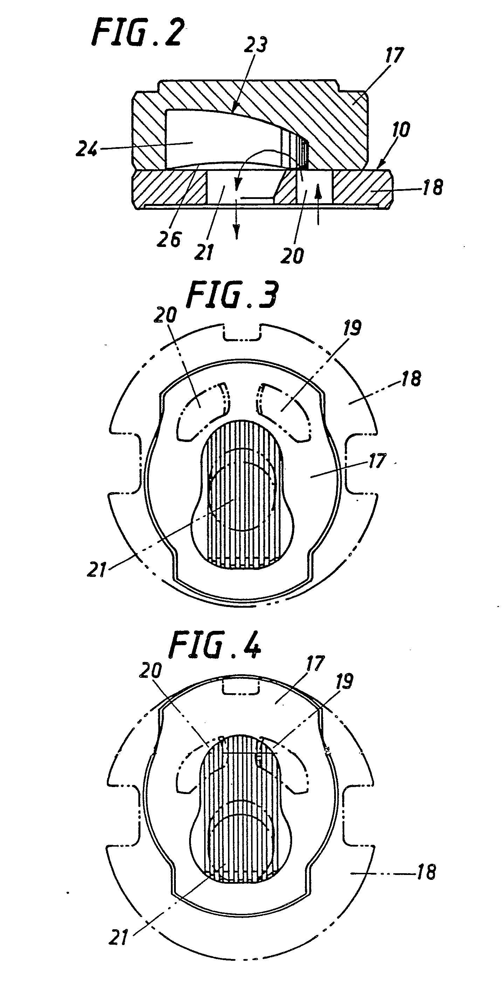

It is not necessary that the guiding members i.e. the sheets 24 extend over the entire length of the flow passage duct and as can be seen from Figure 2 the sheets 24 may in front of the outlet opening 21 be provided with a concavity 26 where a first mixing of the liquids may occur. It may also be convenient that the depths of the ducts 25 increase as seen from the inlet openings 19, 20, which is also shown in Figure 2. It is also possible to design the ducts 25 with a cross-section increasing in a direction towards the outlet opening 21 i.e. the sheets 24 diverge in a direction from the inlet openings 19, 20 toward the outlet opening 21.

In Figure 6 the guiding members 24 constitute a separate part that is loosely inserted into the flow passage duct 23. This guiding member may for instance be made of a suitable plastic material, where the sheets are connected to each other by the base plate 27 which has substantially the same shape as the bottom surface of the flow passage duct 23.

The invention is not limited to the embodiments shown, but a number of variations are possible within the scope of the claims.

## Claims

1. Device for sliding valves, particularly for mixing faucets of the kind comprising two valve plates (17, 18), which are engaging each other, one of which valve plates is fixed and provided with inlet openings (19, 20) and one outlet opening (21), and the other one being movable relative to the first one and provided with a flow passage duct (23) for adjusting the flow and/or the mixing of the liquids, whereby guiding members (24) are arranged at least in the area in front of the inlet openings (19, 20) in the longitudinal direction of the flow passage duct (23), i.e. in the direction from the inlet openings (19, 20) toward the outlet opening (21), which guiding members (24) are thin sheets interconnected via a base plate (27) and extending over substantially the entire depth of the flow passage duct (23), the sheets (24) have a considerably larger extension in the depth of the flow passage duct (23) than their thickness and spacing, and being adapted to cause the liquid or the liquids to flow laminarly through the mentioned flow passage duct, characterized thereby, that the flow passage duct (23) consists of a cavity with a bottom in the movable valve plate (17), said guiding members being located in said cavity with said base plate (27) placed on the bottom of the flow passage duct (23), said sheets at least in the area just opposite said inlet openings (19, 20) extending over the entire depth of the flow passage duct (23).

2. Device according to claim 1, characterized in, that the volume of the ducts (25) formed between said sheets (24) increases in a direction from the inlet openings (19, 20) towards the outlet opening (21)

a) in increasing the depths of said ducts (25) in said direction as to be seen in Figure 2 and/or

b) in diverging the sheets in said direction.

## Patentansprüche

1. Vorrichtung für Schiebeventil, insbesondere für Mischhähne der Art, die zwei Ventilplatten (17, 28) aufweisen, die aneinander anliegen, wovon eine Ventilplatte fest ist und zwei Einlassöffnungen (19, 20) und eine Auslassöffnung (21) aufweist und die andere relativ zur ersten verschiebbar ist und einen Strömungsdurchgangskanal (23) zum Einstellen der Mengenströmung und/oder der Mischung der Flüssigkeiten hat, wobei Führungsglieder (24) mindestens im Bereich vor den Einlassöffnungen (19, 20) in Längsrichtung des Strömungsdurchgangskanals, d.h. in Richtung von den Einlassöffnungen (19, 20) gegen die Auslassöffnung (21) gesehen angeordnet sind, welche Führungsglieder (24) dünne, über eine Grundplatte (27) miteinander verbundene Platten sind, die sich über im wesentlichen die gesamte Tiefe des Strömungsdurchgangskanals (23) erstrecken, welche Platten (24) in der Tiefe des Strömungsdurchgangskanals (23) ein beträchtlich grösseres Ausmass als ihre Dicke und ihren Abstand aufweisen und derart ausgebildet sind, dass sie bewirken, dass die Flüssigkeit oder Flüssigkeiten laminar durch den genannten Strömungsdurchgangskanal strömt, bzw. strömen, dadurch gekennzeichnet, dass der Strömungsdurchgangskanal (23) aus einer Höhlung mit einem in der verschiebbaren Ventilplatte (17) gelegenen Boden besteht, dass die Führungsglieder bei der auf dem Boden des Strömungsdurchgangskanals (23) angeordneten Grundplatte (27) in der Höhlung angeordnet sind, welche Platten sich mindestens im Bereich unmittelbar gegenüber der Einlassöffnungen (19, 20) über die gesamte Tiefe des Strömungsdurchgangskanals (23) erstrecken.

2. Vorrichtung nach Anspruch 1, dadurch gekennzeichnet, dass das Volumen der zwischen den Platten (24) gebildeten Kanäle (25) von den Einlassöffnungen (19, 20) gegen die Auslassöffnungen (21) zunimmt,

a) indem die Tiefe der Kanäle (25) in Richtung wie aus der Fig. 2 ersichtlich ist, erhöht wird und/oder

b) die Platten in dieser Richtung auseinanderlaufend anordnet.

## Revendications

1. Dispositif pour soupapes coulissantes, en particulier pour des robinets mélangeurs du type comprenant deux plaques obturatrices de soupapes (17, 18), qui viennent en contact l'une avec l'autre, une première desdites plaques obturatrices étant fixe et présentant des ouvertures d'entrée (19, 20) et une ouverture de sortie (21), et l'autre plaque obturatrice étant mobile par rapport à la première et présentant un canal de passage d'écoulement (23) pour régler l'écoulement et/ou le mélange des liquides, dans lequel des organes de guidages (24) sont disposés au moins dans la zone en face des ouvertures d'entrée (19, 20) dans la direction longitudinale du canal de passage d'écoulement (23), c'est-à-dire dans la direction allant des ouvertures d'entrée (19, 20) vers l'ouverture de sortie (21), lesquels organes de guidage (24) sont des feuilles minces reliées les unes aux autres par l'intermédiaire d'une plaque de base (27) et s'étendant sur sensiblement la profondeur toute entière du canal de passage d'écoulement (23), les feuilles (24) ayant une dimension bien plus importante selon la profondeur du canal de passage d'écoulement (23) que selon leur épaisseur et leur espacement et étant destinées à provoquer un écoulement laminaire du liquide ou des liquides dans le canal de passage d'écoulement mentionné, caractérisé par le fait que le canal de passage d'écoulement (23) est constitué par une cavité avec un fond dans la plaque obturatrice de soupape mobile (17), lesdits organes de guidage étant situés dans ladite cavité avec ladite plaque de base (27) placée sur le fond du canal de passage d'écoulement (23), lesdites feuilles, au moins dans la zone juste opposée auxdites ouvertures d'entrée (19, 20), s'étendant sur toute la profondeur du canal de passage d'écoulement (23).

2. Dispositif selon la revendication 1, caractérisé en ce que

le volume des canaux (25) formés entre lesdites feuilles (24) augmente dans un sens allant des ouvertures d'entrée (19, 20) vers l'ouverture de sortie (21)

a) en augmentant les profondeurs desdits canaux (25) dans ledit sens lorsque l'on regarde la figure 2 et/ou

b) en faisant diverger les feuilles dans ledit sens.

0 059 697

FIG.1

FIG.2

FIG.3

FIG.4

# FIG.5

# FIG.6